(19) Europäisches Patentamt / European Patent Office / Office européen des brevets

(11) **EP 3 294 791 B1**

(12) **EUROPÄISCHE PATENTSCHRIFT**

(45) Veröffentlichungstag und Bekanntmachung des Hinweises auf die Patenterteilung:
**02.10.2019  Patentblatt 2019/40**

(21) Anmeldenummer: **16722178.7**

(22) Anmeldetag: **10.05.2016**

(51) Int Cl.:
**C08G 69/14** (2006.01)    **C08J 5/04** (2006.01)
**C08G 69/18** (2006.01)    **C08G 69/28** (2006.01)
**C08L 77/02** (2006.01)

(86) Internationale Anmeldenummer:
**PCT/EP2016/060459**

(87) Internationale Veröffentlichungsnummer:
**WO 2016/180832 (17.11.2016 Gazette 2016/46)**

(54) **CAPROLACTAM FORMULIERUNGEN**

CAPROLACTAM FORMULATIONS

FORMULES DE CAPROLACTAME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2015  EP 15167410**
**29.01.2016  EP 16153429**

(43) Veröffentlichungstag der Anmeldung:
**21.03.2018  Patentblatt 2018/12**

(73) Patentinhaber: **BASF SE**
**67056 Ludwigshafen am Rhein (DE)**

(72) Erfinder: **DESBOIS, Philippe**
**68535 Edingen-Neckarhausen (DE)**

(74) Vertreter: **BASF IP Association**
**BASF SE**
**G-FLP-C006**
**67056 Ludwigshafen (DE)**

(56) Entgegenhaltungen:
**EP-A1- 2 789 641    US-A1- 2010 286 343**

**Beschreibung**

Die vorliegende Erfindung betrifft ein Verfahren zur Herstellung einer polymerisierbaren Mischung (pM), die mindestens ein Lactam, mindestens einen Katalysator, mindestens einen Aktivator und mindestens ein Fasermaterial enthält. Die vorliegende Erfindung betrifft außerdem die polymerisierbare Mischung (pM) sowie ein Verfahren zur Herstellung eines Polyamids (P) durch Polymerisation der polymerisierbaren Mischung (pM). Des Weiteren betrifft die vorliegende Erfindung das Polyamid (P) sowie einen Formkörper aus dem Polyamid (P) und die Verwendung der polymerisierbaren Mischung (pM) zur Herstellung des Polyamids (P).

Polyamide sind im Allgemeinen teilkristalline Polymere, die industriell von besonderer Bedeutung sind, da sie sich durch sehr gute mechanische Eigenschaften auszeichnen. Insbesondere besitzen sie eine hohe Festigkeit, Steifigkeit und Zähigkeit, eine gute Chemikalienbeständigkeit sowie eine hohe Abriebfestigkeit und Kriechstromfestigkeit. Diese Eigenschaften sind insbesondere von Bedeutung für die Herstellung von Spritzgussteilen. Eine hohe Zähigkeit ist besonders wichtig für die Verwendung von Polyamiden als Verpackungsfolien. Aufgrund ihrer Eigenschaften werden Polyamide industriell zur Herstellung von Textilien wie Angelschnüren, Kletterseilen und Teppichböden verwendet. Außerdem finden Polyamide Verwendung zur Herstellung von Dübeln, Schrauben und Kabelbindern. Darüber hinaus werden Polyamide als Lacke, Klebstoffe und Beschichtungsmaterialien eingesetzt.

Polyamidformteile werden in den letzten Jahren vermehrt als Werkstoffe und als Ersatz für metallische Werkstoffe, beispielsweise im Automobilbau, eingesetzt und können sowohl Teile im Antriebsstrang (Power Train) als auch Karosserieteile aus Metall ersetzen. Hierfür werden insbesondere faserverstärkte Polyamidformteile eingesetzt. Zur Herstellung von faserverstärkten Polyamidformteilen sind im Stand der Technik verschiedene Verfahren beschrieben. So kann beispielsweise eine Form, in der das Formteil hergestellt werden soll, ein Fasermaterial enthalten, und die entsprechenden Monomere zur Herstellung des Polyamids in die Form gegeben werden, wobei in situ die Polymerisation der Monomere gestartet wird. In der Regel ist dazu nur ein Erhitzen auf eine Temperatur oberhalb des Schmelzpunkts der Monomere erforderlich und nicht über den Schmelzpunkt des herzustellenden Polyamids.

Eine weitere Möglichkeit zur Herstellung von Polyamidformteilen, die Faserverstärkungen enthalten, ist beispielsweise in der WO 2014/086757 beschrieben. Dabei wird eine polymerisierbare Zusammensetzung, die ein Lactam, einen Katalysator und einen Aktivator enthält, in fester rieselfähiger Form auf ein Fasermaterial aufgetragen und dieses Fasermaterial anschließend bei erhöhtem Druck und einer Temperatur, bei der die feste polymerisierbare Zusammensetzung fließfähig ist, behandelt und schließlich das Fasermaterial abgekühlt. Anschließend kann das Fasermaterial einer Umformung unterzogen werden. Dabei polymerisiert das Lactam.

Die so erhaltenen Polyamidformteile besitzen bereits eine gute mechanische Stabilität.

Die EP 2 789 641 beschreibt ein Verfahren zur Herstellung von Zusammensetzungen, die ein Lactam und/oder Lacton, einen Katalysator und einen Aktivator enthalten. Zur Herstellung werden die Komponenten vermischt, beispielsweise in einem Extruder. Diese Zusammensetzungen sind nach dem in der EP 2 789 641 beschriebenen Verfahren gut herstellbar. Die Zusammensetzungen können zusätzlich Füll- und/oder Verstärkungsstoffe enthalten. Werden diese Füll- und/oder Verstärkungsstoffe während des Vermischens der anderen Komponenten im Extruder zugegeben, so werden allerdings häufig inhomogene Mischungen erhalten, die zur Verklumpung neigen und teilweise zu einem Verstopfen der Düse führen.

Die US 2010/0286343 beschreibt ein Verfahren um glasfaserverstärkte Polyamide herzustellen. Dabei wird ein Glasfasermaterial mit einem Lactammonomer und einem Polymerisationskatalysator gemischt und in einem Extruder erhitzt, so dass das Lactam polymerisiert. Dadurch wir ein glasfaserverstärktes Polyamid erhalten. Die US 2010/0286343 beschreibt allerdings keine Möglichkeit zur Herstellung eines Masterbatches, in dem das Lactam unpolymerisiert vorliegt.

Die EP 0 459 199 beschreibt die Herstellung von Lactamschmelzen mit erhöhter Viskosität. Die Lactamschmelzen enthalten ein Lactam sowie gegebenenfalls Füll- und Verstärkungsstoffe. Zur Herstellung werden sie unter Rühren homogenisiert. Nachteilig ist, dass diese Lactamschmelzen nicht oder nur schlecht in einem Extruder hergestellt werden können, da häufig inhomogene Mischungen erhalten werden, die zur Verklumpung neigen und teilweise die Düse verstopfen.

Es besteht daher Bedarf an weiteren Verfahren zur Herstellung von Formkörpern aus einem Polyamid (P) mit guter mechanischer Stabilität sowie an polymerisierbaren Mischungen (pM), die die Herstellung derartiger Formkörper ermöglichen, und Verfahren zur Herstellung der entsprechenden polymerisierbaren Mischungen (pM).

Die der vorliegenden Erfindung zugrunde liegende Aufgabe ist also die Bereitstellung eines Verfahrens zur Herstellung einer polymerisierbaren Mischung (pM), die die Herstellung von Formkörpern aus einem Polyamid (P) ermöglicht.

Gelöst wird diese Aufgabe durch ein Verfahren zur Herstellung einer polymerisierbaren Mischung (pM), die die Komponenten

    (A) mindestens ein Lactam,
    (B) mindestens einen Katalysator,
    (C) mindestens einen Aktivator,
    (D) mindestens ein Fasermaterial

enthält, dadurch gekennzeichnet, dass die Komponenten (A), (B), (C) und (D) in einem Extruder mit einer Scherrate von mindestens 500 s$^{-1}$ compoundiert werden unter Erhalt der polymerisierbaren Mischung (pM)), wobei das Compoundieren der Komponenten (A), (B), (C) und (D) in dem Extruder die folgenden Schritte umfasst

     a) Bereitstellung einer ersten Mischung (M1), die die Komponenten (A) und (D) enthält, in dem Extruder,

     b) Zugabe der Komponente (C) zu der ersten Mischung (M1) in dem Extruder unter Erhalt einer zweiten Mischung (M2) in dem Extruder,

     c) Zugabe der Komponente (B) zu der zweiten Mischung (M2) in dem Extruder unter Erhalt der polymerisierbaren Mischung (pM) in dem Extruder.

Die erfindungsgemäß hergestellte polymerisierbare Mischung (pM) kann gelagert, transportiert und gehandelt werden und kann auch zu einem späteren Zeitpunkt zur Herstellung eines Polyamids (P) eingesetzt werden. Vorteilhaft ist außerdem, dass kein aufwändiges Reaktivpolymerisationsverfahren, in dem zwei Komponenten wie zum Beispiel beim RTM (Reaction Transfer Molding) oder beim RIM (Reaction Injection Molding) eingesetzt werden müssen, zur Polymerisation der polymerisierbaren Mischung (pM) notwendig ist. Stattdessen kann die polymerisierbare Mischung (pM) ohne die Zugabe weiterer Komponenten polymerisiert werden. Die erfindungsgemäße polymerisierbare Mischung (pM) ist somit gebrauchsfertig (ready to use). Die durch Polymerisation der polymerisierbaren Mischung (pM) erhältlichen Polyamide (P) weisen zudem einen niedrigeren Restmonomergehalt auf als die im Stand der Technik beschriebenen Polyamide.

Die mit der erfindungsgemäß hergestellten polymerisierbaren Mischung (pM) hergestellten Polyamide (P) sowie Formkörper daraus weisen zudem eine besonders gleichmäßige Verteilung des mindestens einen Fasermaterials (Komponente (D)) auf, was eine besonders gute mechanische Stabilität und Verstärkung des Formkörpers bewirkt.

Die erfindungsgemäß hergestellte polymerisierbare Mischung (pM) eignet sich insbesondere für Spritzgussverfahren, wobei die Düsen beim Spritzguss überraschenderweise trotz des in der polymerisierbaren Mischung (pM) enthaltenen mindestens einen Fasermaterials (Komponente (D)) nicht verstopfen. Zudem ist die Polymerisation der polymerisierbaren Mischung (pM) besonders vollständig, was in einem niedrigen Restmonomergehalt des erhaltenen Polyamids (P) resultiert.

Nachfolgend wird das erfindungsgemäße Verfahren näher erläutert.

In dem erfindungsgemäßen Verfahren werden die Komponenten (A) - mindestens ein Lactam, (B) - mindestens ein Katalysator, (C) - mindestens ein Aktivator und (D) - mindestens ein Fasermaterial, in einem Extruder mit einer Scherrate von mindestens 500 s$^{-1}$ compoundiert.

Unter "compoundieren" wird im Rahmen der vorliegenden Erfindung das Vermischen der Komponenten (A), (B), (C) und (D) verstanden.

Erfindungsgemäß wird zunächst die Komponente (A) mit der Komponente (D) in dem Extruder compoundiert. Anschließend werden die Komponenten (B) und (C), gegebenenfalls mit weiterer Komponente (A), gemeinsam oder nacheinander ebenfalls in den Extruder eingebracht und mit den bereits im Extruder enthaltenen Komponenten (A) und (D) compoundiert.

Werden die Komponenten (B) und (C) gemeinsam in den Extruder eingebracht, so ist es bevorzugt, dass die Komponente (B) und die Komponente (C) jeweils separat voneinander, also räumlich getrennt voneinander dem Extruder zugeführt werden. Es ist außerdem bevorzugt, dass die Komponenten (B) und (C) jeweils zusammen mit weiterer Komponente (A) dem Extruder zugeführt werden.

Erfindungsgemäß umfasst das Compoundieren der Komponenten (A), (B), (C) und (D) in dem Extruder die folgenden Schritte.

     a) Bereitstellung einer ersten Mischung (M1), die die Komponenten (A) und (D) enthält, in dem Extruder,

     b) Zugabe der Komponente (C) zu der ersten Mischung (M1) in dem Extruder unter Erhalt einer zweiten Mischung (M2) in dem Extruder,

     c) Zugabe der Komponente (B) zu der zweiten Mischung (M2) in dem Extruder unter Erhalt der polymerisierbaren Mischung (pM) in dem Extruder.

Es ist erfindungsgemäß außerdem bevorzugt, dass die Schritte b) und c) gleichzeitig durchgeführt werden.

Gegenstand der vorliegenden Erfindung ist daher auch ein Verfahren, bei dem die Schritte b) und c) gleichzeitig durchgeführt werden.

Es versteht sich von selbst, dass wenn die Schritte b) und c) gleichzeitig durchgeführt werden, sich die zweite Mischung (M2) nur kurzzeitig und intermediär bildet. Daher ist es bevorzugt, dass wenn die Schritte b) und c) gleichzeitig durchgeführt werden, die Komponente (C) und die Komponente (B) gleichzeitig zu der ersten Mischung (M1) in dem Extruder gegeben werden unter Erhalt der polymerisierbaren Mischung (pM) in dem Extruder.

Gegenstand der vorliegenden Erfindung ist daher auch ein Verfahren, bei dem die Schritte b) und c) gleichzeitig durchgeführt werden, wobei die Komponente (B) und die Komponente (C) zu der ersten Mischung (M1) in dem Extruder gegeben werden unter Erhalt der polymerisierbaren Mischung (pM) in dem Extruder.

Darüber hinaus ist es erfindungsgemäß bevorzugt, dass die Komponente (C) in Schritt b) zusammen mit weiterer Komponente (A) zu der ersten Mischung (M1) zugegeben wird, und/oder dass die Komponente (B) Schritt c) zusammen mit weiterer Komponente (A) zu der zweiten Mischung (M2) in den Extruder gegeben wird.

Gegenstand der vorliegenden Erfindung ist daher auch ein Verfahren bei dem die Komponente (C) in Schritt b) zusammen mit weiterer Komponente (A) zu der ersten Mischung (M1) in den Extruder zugegeben wird unter Erhalt einer zweiten Mischung (M2) in dem Extruder, und/oder bei dem die Komponente (B) in Schritt c) zusammen mit weiterer Komponente (A) zu der zweiten Mischung (M2) in den Extruder zugegeben wird unter Erhalt der polymerisierbaren Mischung (pM).

Die Bereitstellung der ersten Mischung (M1) in Schritt a) kann nach allen dem Fachmann bekannten Methoden erfolgen. Beispielsweise kann zunächst die Komponente (A) in den Extruder eingebracht werden und anschließend die Komponente (D) zugeführt werden. Anschließend werden die Komponenten (A) und (D) compoundiert unter Erhalt der ersten Mischung (M1).

Anschließend wird erfindungsgemäß die Komponente (C) zu der ersten Mischung (M1) gegeben. Die erste Mischung (M1) wird dann mit der Komponente (C) compoundiert unter Erhalt der zweiten Mischung (M2). Anschließend wird die Komponente (B) zu der zweiten Mischung (M2) gegeben und die Komponente (B) mit der zweiten Mischung (M2) compoundiert unter Erhalt der polymerisierbaren Mischung (pM).

Schritt a) kann bei einer beliebigen Temperatur erfolgen, unter der Voraussetzung, dass die Komponente (A) bei den im Extruder vorliegenden Bedingungen flüssig ist.

Beispielsweise kann Schritt a) bei einer Manteltemperatur des Extruders im Bereich von 105 bis 220 °C durchgeführt werden, bevorzugt bei einer Manteltemperatur des Extruders im Bereich von 110 bis 180 °C und insbesondere bevorzugt bei einer Manteltemperatur des Extruders im Bereich von 115 bis 175 °C.

Unter "flüssig" wird im Rahmen der vorliegenden Erfindung verstanden, dass die Komponente (A) im Extruder förderbar ist.

Unter "Manteltemperatur des Extruders" wird die Temperatur des Mantels des Extruders verstanden. Die Manteltemperatur des Extruders ist also die Temperatur der Außenwand des Gehäuses des Extruders.

Die Manteltemperatur des Extruders kann höher sein als die Temperatur der Komponenten im Extruder, ebenso ist es möglich, dass die Manteltemperatur des Extruders niedriger ist als die Temperatur der Komponenten im Extruder. Beispielsweise ist es möglich, dass die Manteltemperatur des Extruders zunächst höher ist als die Temperatur der Komponenten im Extruder, wenn die Komponenten erwärmt werden. Werden die Komponenten im Extruder abgekühlt, so ist es möglich, dass die Manteltemperatur des Extruders niedriger ist, als die Temperatur der Komponenten im Extruder.

Üblicherweise wird der Extruder während des erfindungsgemäßen Verfahrens geheizt oder gekühlt.

Das Heizen und das Kühlen des Extruders kann nach allen dem Fachmann bekannten Methoden erfolgen. Üblicherweise wird der Extruder durch die Reibungswärme, die bei der Compoundierung der Komponenten (A), (B), (C) und (D) frei gesetzt wird, geheizt. Zusätzlich kann der Extruder auch von außen geheizt werden, beispielsweise durch das Zirkulieren einer Flüssigkeit innerhalb des Gehäuses des Extruders. Diese Flüssigkeit kann auch eingesetzt werden zur Kühlung des Extruders. Diese Verfahren sind dem Fachmann als solche bekannt.

Schritt b) kann ebenfalls bei einer beliebigen Temperatur durchgeführt werden, bei der die Komponente (A) unter den im Extruder vorliegenden Bedingungen flüssig ist. Vorzugsweise wird Schritt b) bei einer Manteltemperatur des Extruders im Bereich von 20 bis < 105 °C, bevorzugt im Bereich von 30 bis 102 °C und insbesondere bevorzugt bei einer Manteltemperatur des Extruders im Bereich von 35 bis 100 °C durchgeführt.

In Schritt c) kann die Komponente (A) bereits teilweise polymerisieren unter Erhalt eines Polyamids (P). Im Zusammenhang mit der Polymerisation der Komponente (A) in Schritt c), wird unter der Polymerisation der Komponente (A) auch die Bildung von Oligomeren aus der Komponente (A) verstanden. Diese Reaktionen sind dem Fachmann bekannt.

Bevorzugt wird Schritt c) so durchgeführt, dass die Komponente (A) nach Schritt c) im Wesentlichen unpolymerisiert vorliegt. Unter "im Wesentlichen unpolymerisiert" wird im Rahmen der vorliegenden Erfindung verstanden, dass die Komponente (A) zu höchstens 50 %, bevorzugt zu höchstens 20 % und insbesondere bevorzugt zu höchstens 5 % polymerisiert vorliegt, jeweils bezogen auf die Gesamtmenge der eingesetzten Komponente (A).

Schritt c) kann ebenfalls bei beliebiger Temperatur durchgeführt werden, bei der die Komponente (A) unter den Bedingungen im Extruder flüssig ist und bei der die Komponente (A) im Wesentlichen unpolymerisiert vorliegt.

Üblicherweise liegt die Manteltemperatur des Extruders während Verfahrensschritt c) im Bereich von 20 bis < 105 °C, bevorzugt im Bereich von 30 bis 102 °C und insbesondere bevorzugt im Bereich von 35 bis 100 °C.

Die in Schritt c) erhaltene polymerisierbare Mischung (pM) wird nach Schritt c) im Allgemeinen aus dem Extruder entnommen. Die polymerisierbare Mischung (pM) kann nach allen dem Fachmann bekannten Methoden aus dem Extruder entnommen werden. Bevorzugt wird die polymerisierbare Mischung (pM) nach Verfahrensschritt c) granuliert unter Erhalt einer granulierten polymerisierbaren Mischung (gpM) (Verfahrensschritt d)).

Gegenstand der vorliegenden Erfindung ist somit auch ein Verfahren, bei dem nach Schritt c) der folgende Schritt durchgeführt wird:

d) granulieren der in Schritt c) erhaltenen polymerisierbaren Mischung (pM) unter Erhalt einer granulierten polymerisierbaren Mischung (gpM).

Verfahren zur Granulierung der polymerisierbaren Mischung (pM) sind dem Fachmann als solche bekannt. Beispielsweise kann die polymerisierbare Mischung (pM) auf einem Förderband abgekühlt werden und anschließend granuliert werden. Es ist darüber hinaus möglich, dass die polymerisierbare Mischung (pM) bei Entnahme aus dem Extruder direkt in Form eines Granulats als granulierte polymerisierbare Mischung (gpM) erhalten wird. In dieser Ausführungsform ist eine zusätzliche Granulierung nicht erforderlich.

Zwischen der Zugabe der Komponente (B) zu der zweiten Mischung (M2) in Schritt c) und dem Entfernen der polymerisierbaren Mischung (pM) aus dem Extruder vergeht üblicherweise ein Zeitraum von höchstens 10 Minuten, bevorzugt von höchstens 5 Minuten und insbesondere bevorzugt von höchstens 1 Minute.

Wird die in Schritt c) erhaltene polymerisierbare Mischung (pM) in Schritt d) granuliert unter Erhalt der granulierten polymerisierbaren Mischung (gpM), so vergeht zwischen der Zugabe der Komponente (B) in Schritt c) und dem Erhalt der granulierten polymerisierbaren Mischung (gpM) in Schritt d) vorzugsweise ein Zeitraum von höchstens 10 Minuten, insbesondere bevorzugt von höchstens 5 Minuten und am meisten bevorzugt von höchstens 1 Minute.

Gegenstand der vorliegenden Erfindung ist somit auch ein Verfahren, bei dem zwischen der Zugabe der Komponente (B) in Schritt c) und dem Erhalt der granulierten polymerisierbaren Mischung (gpM) in Schritt d) ein Zeitraum von höchstens 10 Minuten vergeht.

Erfindungsgemäß weist der Extruder eine Scherrate von mindestens 500 s$^{-1}$ auf, bevorzugt von mindestens 800 s$^{-1}$ und insbesondere bevorzugt von mindestens 1000 s$^{-1}$.

Beispielsweise weist der Extruder eine Scherrate im Bereich von 500 bis 25 000 s$^{-1}$, bevorzugt im Bereich von 800 bis 25 000 s$^{-1}$ und insbesondere bevorzugt von 1 000 bis 25 000 s$^{-1}$ auf.

Die Scherrate des Extruders kann nach folgender Formel berechnet werden:

$$S = (\pi \cdot d \cdot N) / \Delta$$

wobei

S die Scherrate ist,
d der Durchmesser der Schnecke des Extruders,
N die Drehzahl der Schnecke des Extruders, und
$\Delta$ die Breite des Spalts zwischen der äußeren Wand der Schnecke und der Innenwand des Extruders.

Der Durchmesser (d) der Schnecke liegt üblicherweise in einem Bereich von 10 bis 300 mm, bevorzugt in einem Bereich von 20 bis 200 mm und insbesondere bevorzugt in einem Bereich von 50 bis 100 mm.

Die Drehzahl (N) der Schnecke liegt beispielsweise in einem Bereich von 50 bis 2000 rpm (rounds per minute), bevorzugt im Bereich von 80 bis 1500 rpm und insbesondere bevorzugt im Bereich von 100 bis 1200 rpm.

Die Breite ($\Delta$) des Spalts liegt üblicherweise in einem Bereich von 10 bis 500 $\mu$m, bevorzugt in einem Bereich von 50 bis 250 $\mu$m und insbesondere bevorzugt in einem Bereich von 100 bis 200 $\mu$m.

Die Schubspannung ($\sigma$), die durch den Extruder auf die enthaltenen Komponenten wirkt, ergibt sich aus dem Produkt der Scherrate (S) des Extruders und der Viskosität ($\eta$) der im Extruder enthaltenen Komponenten:

$$\sigma = S \cdot \eta$$

Die Viskosität ($\eta$) der im Extruder enthaltenen Komponenten liegt üblicherweise im Bereich im Bereich von 2 bis 1000 mPas , bevorzugt im Bereich von 5 bis 500 mPas und insbesondere bevorzugt im Bereich von 10 bis 300 mPas, gemessen mit einem schubspannungskontrollierten Rotationsviskosimeter bei einer Scherrate von 100 s$^{-1}$ und einer Temperatur von 100 °C.

Die Schubspannung ($\sigma$) liegt daher beispielsweise in einem Bereich von 2,5 bis 12500 Pa, bevorzugt im Bereich von 4 bis 12500 Pa und insbesondere bevorzugt im Bereich von 5 bis 12500 Pa.

Als Extruder eignen sich alle dem Fachmann bekannten Extruder wie beispielsweise Einschneckenextruder oder Doppelschneckenextruder. Doppelschneckenextruder sind erfindungsgemäß bevorzugt. Einschneckenextruder und Doppelschneckenextruder sind dem Fachmann bekannt.

Bevorzugt umfasst der Extruder mindestens zwei Abschnitte.

Insbesondere bevorzugt umfasst der Extruder mindestens die folgenden Abschnitte:

(I) einen ersten Abschnitt,
(II) einen zweiten Abschnitt und
(III) einen dritten Abschnitt.

Die einzelnen Abschnitte des Extruders unterscheiden sich durch die Konzentration der in diesen Abschnitten im Extruder enthaltenen Komponenten (A), (B), (C) und (D) sowie der gegebenenfalls enthaltene Komponente (E).

Gegenstand der vorliegenden Erfindung ist daher auch ein Verfahren, bei dem sich die Konzentration der Komponenten (A), (B), (C) und (D) im ersten Abschnitt (I) des Extruders von der Konzentration der Komponenten (A), (B), (C) und (D) in dem zweiten Abschnitt (II) und in dem dritten Abschnitt (III) des Extruders unterscheidet und bei dem sich die Konzentration der Komponenten (A), (B), (C) und (D) im zweiten Abschnitt (II) des Extruders von der Konzentration der Komponenten (A), (B), (C) und (D) im dritten Abschnitt (III) des Extruders unterscheidet.

Darüber hinaus können sich die Abschnitte beispielsweise in den Temperaturbereichen, die der Extruder in den jeweiligen Abschnitten aufweist, unterscheiden sowie gegebenenfalls in den Druckbereichen, die der Extruder in den jeweiligen Abschnitten aufweist.

Beispielsweise kann der Extruder im ersten Abschnitt (I) eine erste Temperatur (T1) aufweisen. "Eine erste Temperatur (T1)" bedeutet im Rahmen der vorliegenden Erfindung, dass der erste Abschnitt (I) genau eine erste Temperatur (T1) aufweisen kann, die über den gesamten ersten Abschnitt (I) gleich (konstant) ist, ebenso ist es möglich, dass der Extruder zwei oder mehrere erste Temperaturen (T1) aufweist. Weist der Extruder im ersten Abschnitt (I) zwei oder mehrere erste Temperaturen (T1) auf, so ist es möglich, dass der erste Abschnitt (I) einen Temperaturgradienten aufweist und die erste Temperatur (T1) kontinuierlich zunimmt oder abnimmt. Ebenso ist es möglich, dass sich Bereiche konstanter erster Temperatur (T1) mit Bereichen, in denen die erste Temperatur kontinuierlich zunimmt oder abnimmt, abwechseln. Darüber hinaus kann sich die Temperatur zwischen Bereichen konstanter erster Temperatur (T1) auch sprunghaft ändern.

Bevorzugt liegt die erste Temperatur (T1) im Bereich von 20 bis 70 °C, besonders bevorzugt im Bereich von 25 bis 50 °C und insbesondere bevorzugt im Bereich von 30 bis 40 °C.

Im zweiten Abschnitt (II) kann der Extruder eine zweite Temperatur (T2) aufweisen. "Eine zweite Temperatur (T2)" bedeutet im Rahmen der vorliegenden Erfindung, dass der Extruder im zweiten Abschnitt (II) genau eine zweite Temperatur (T2) aufweisen kann, die über den gesamten zweiten Abschnitt (II) gleich (konstant) ist, ebenso ist es möglich, dass der Extruder im zweiten Abschnitt (II) zwei oder mehrere zweite Temperaturen (T2) aufweist. Weist der Extruder im zweiten Abschnitt (II) zwei oder mehrere zweite Temperaturen (T2) auf, so ist es möglich, dass der zweite Abschnitt (II) einen Temperaturgradienten aufweist und die zweite Temperatur (T2) kontinuierlich zunimmt oder abnimmt. Ebenso ist es möglich, dass sich Bereiche konstanter zweiter Temperatur (T2) mit Bereichen, in denen die zweite Temperatur (T2) kontinuierlich zunimmt oder abnimmt, abwechseln. Darüber hinaus kann sich die Temperatur zwischen Bereichen konstanter zweiter Temperatur (T2) auch sprunghaft ändern.

Bevorzugt liegt die zweite Temperatur (T2) im Bereich von 105 bis 220 °C, besonders bevorzugt im Bereich von 110 bis 180 °C und insbesondere bevorzugt im Bereich von 115 bis 175 °C.

Der Extruder weist im dritten Abschnitt (III) beispielsweise eine dritte Temperatur (T3) auf. "Eine dritte Temperatur (T3)" bedeutet im Rahmen der vorliegenden Erfindung, dass der Extruder im dritten Abschnitt (III) genau eine dritte Temperatur (T3) aufweisen kann, die über den gesamten dritten Abschnitt (III) gleich (konstant) ist, ebenso ist es möglich, dass der dritte Abschnitt (III) des Extruders zwei oder mehrere dritte Temperaturen (T3) aufweist. Weist der Extruder im dritten Abschnitt (III) zwei oder mehrere dritte Temperaturen (T3) auf, so ist es möglich, dass der dritte Abschnitt (III) einen Temperaturgradienten aufweist und die dritte Temperatur (T3) kontinuierlich zunimmt oder abnimmt. Ebenso ist es möglich, dass sich Bereiche konstanter dritter Temperatur (T3) mit Bereichen, in denen die dritte Temperatur (T3) kontinuierlich zunimmt oder abnimmt, abwechseln. Darüber hinaus kann sich die Temperatur zwischen den Bereichen konstanter dritter Temperatur (T3) auch sprunghaft ändern.

Die dritte Temperatur (T3) liegt bevorzugt im Bereich von 20 bis < 105 °C, besonders bevorzugt im Bereich von 30 bis 102 °C und insbesondere bevorzugt im Bereich von 35 bis 100 °C.

Bevorzugt unterscheidet sich die zweite Temperatur (T2) von der ersten Temperatur (T1) und von der dritten Temperatur (T3).

Gegenstand der vorliegenden Erfindung ist daher auch ein Verfahren, bei dem sich die zweite Temperatur (T2) von der ersten Temperatur (T1) unterscheidet und bei dem sich die zweite Temperatur (T2) von der dritten Temperatur (T3) unterscheidet.

Es ist also bevorzugt, dass der Extruder mindestens die folgenden Abschnitte umfasst:

(I) einen ersten Abschnitt,
(II) einen zweiten Abschnitt und
(III) einen dritten Abschnitt,

wobei der Extruder im ersten Abschnitt (I) eine erste Temperatur (T1), im zweiten Abschnitt (II) eine zweite Temperatur (T2) und im dritten Abschnitt (III) eine dritte Temperatur (T3) aufweist, wobei die zweite Temperatur (T2) im Bereich von 105 bis 220 °C liegt.

Gegenstand der vorliegenden Erfindung ist somit auch ein Verfahren, bei dem der Extruder mindestens die folgenden Abschnitte umfasst

(I) einen ersten Abschnitt,
(II) einen zweiten Abschnitt und
(III) einen dritten Abschnitt,

wobei der Extruder im ersten Abschnitt (I) eine erste Temperatur (T1), im zweiten Abschnitt (II) eine zweite Temperatur (T2) und im dritten Abschnitt (III) eine dritte Temperatur (T3) aufweist, wobei die zweite Temperatur (T2) im Bereich von 105 bis 220 °C liegt.

Es ist darüber hinaus bevorzugt, dass der Extruder im ersten Abschnitt (I) eine erste Temperatur (T1), die im Bereich von 20 bis 70 °C liegt, aufweist und/oder der Extruder im dritten Abschnitt (III) eine dritte Temperatur (T3), die im Bereich von 20 bis < 105 °C liegt, aufweist.

Gegenstand der vorliegenden Erfindung ist somit auch ein Verfahren, bei dem der Extruder im ersten Abschnitt (I) eine erste Temperatur (T1), die im Bereich von 20°C bis 70°C liegt, aufweist, und/oder der Extruder im dritten Abschnitt (III) eine dritte Temperatur (T3), die im Bereich von 20 bis < 105 °C liegt, aufweist.

Unter der ersten Temperatur (T1), der zweiten Temperatur (T2) und der dritten Temperatur (T3) wird jeweils die Manteltemperatur des Extruders in den jeweiligen Abschnitten verstanden. Die erste Temperatur (T1), die der Extruder im ersten Abschnitt (I) aufweist, wird daher auch als erste Manteltemperatur des Extruders bezeichnet. Die Bezeichnungen "erste Temperatur (T1)" und "erste Manteltemperatur" werden daher im Rahmen der vorliegenden Erfindung synonym gebraucht und besitzen daher dieselbe Bedeutung. Die zweite Temperatur (T2), die der Extruder im zweiten Abschnitt (II) aufweist, wird daher auch als zweite Manteltemperatur des Extruders bezeichnet. Die Bezeichnungen "zweite Temperatur (T2)" und "zweite Manteltemperatur" werden daher im Rahmen der vorliegenden Erfindung synonym gebraucht und besitzen daher dieselbe Bedeutung. Die dritte Temperatur (T3), die der Extruder im dritten Abschnitt (III) aufweist, wird daher auch als dritte Manteltemperatur des Extruders bezeichnet. Die Bezeichnungen "dritte Temperatur (T3)" und "dritte Manteltemperatur" werden daher im Rahmen der vorliegenden Erfindung synonym gebraucht und besitzen daher dieselbe Bedeutung.

Für die Bestimmung der ersten Manteltemperatur, der zweiten Manteltemperatur und der dritten Manteltemperatur gelten die zuvor beschriebenen Ausführungen für die Manteltemperatur des Extruders entsprechend.

Jeder Abschnitt des Extruders umfasst zudem mindestens eine Zone.

"Mindestens eine Zone" bedeutet im Rahmen der vorliegenden Erfindung sowohl genau eine Zone, als auch zwei oder mehrere Zonen.

Umfasst ein Abschnitt des Extruders genau eine Zone, so entspricht der Abschnitt des Extruders der Zone.

Die Zonen unterscheiden sich beispielsweise in der Temperatur in den Zonen, in dem Druck in den Zonen und/oder in den in den Zonen enthaltenen Elementen.

Die Zonen können sich darüber hinaus in der Länge der enthaltenen Elemente unterscheiden.

Unter "enthaltenen Elementen" werden beispielsweise Förderelemente, Stauelemente, Mischelemente und Knetelemente verstanden. Geeignete Förderelemente, Stauelemente, Mischelemente und Knetelemente, die in dem Extruder enthalten sein können, sind dem Fachmann bekannt.

Förderelemente dienen dem Weitertransport der im Extruder enthaltenen Komponenten innerhalb des Extruders. Die Schergeschwindigkeit, die durch die Förderelemente auf die Komponenten im Extruder wirkt, ist geringer als die Schergeschwindigkeit, die durch Mischelemente oder Knetelemente auf die Komponenten im Extruder wirkt. Geeignete Förderelemente sind dem Fachmann bekannt und beispielsweise Schneckenförderelemente.

Mischelemente dienen dem Vermischen der einzelnen, im Extruder enthaltenen Komponenten. Die Schergeschwindigkeit, die durch die Mischelemente auf die Komponenten im Extruder wirkt, ist üblicherweise geringer als die Schergeschwindigkeit, die durch Knetelemente auf die Komponenten wirkt. Geeignete Mischelemente sind dem Fachmann bekannt und beispielsweise Zahnmischelemente oder Schneckenmischelemente.

Knetelemente dienen ebenfalls dem Vermischen der einzelnen, im Extruder enthaltenen Komponenten. Gleichzeitig zerkleinern sie beispielsweise die Komponente (D). Die Schergeschwindigkeit, die durch die Knetelemente auf die Komponenten im Extruder wirkt, ist üblicherweise höher als die Schergeschwindigkeit, die durch Mischelemente und durch Förderelemente auf die Komponenten wirkt. Geeignete Knetelemente sind dem Fachmann bekannt und beispielsweise Knetschnecken oder Knetblöcke, wie Scheibenknetblöcke oder Schulterknetblöcke.

Die Begriffe Schergeschwindigkeit und Scherrate werden im Rahmen der vorliegenden Erfindung synonym gebraucht und besitzen daher die gleiche Bedeutung.

Stauelemente wirken im Gegensatz zu Förderelementen rückfördernd und stauen so die im Extruder enthaltenen Komponenten. Als Stauelemente werden üblicherweise Förderelemente eingesetzt, die so montiert werden, dass sie entgegen der Transportrichtung im Extruder fördern.

Zonen, die Förderelemente enthalten, werden auch als "Förderzonen" bezeichnet. Zonen, die Stauelemente enthalten, werden auch als "Stauzonen" bezeichnet. Zonen, die Mischelemente enthalten, werden auch als "Mischzonen" bezeichnet und Zonen, die Knetelemente enthalten, werden auch als "Knetzonen" bezeichnet.

In einer Ausführungsform umfasst der Extruder 1 bis 20 Förderzonen, 1 bis 10 Stauzonen, 1 bis 10 Mischzonen und 1 bis 10 Knetzonen, bevorzugt 2 bis 15 Förderzonen, 1 bis 8 Stauzonen, 1 bis 5 Mischzonen und 2 bis 10 Knetzonen, insbesondere bevorzugt 5 bis 13 Förderzonen, 1 bis 5 Stauzonen, 1 bis 3 Mischzonen und 3 bis 7 Knetzonen.

Beispielsweise umfasst der erste Abschnitt (I) des Extruders bevorzugt 1 bis 5 Förderzonen und optional 1 bis 3 Mischzonen, besonders bevorzugt 1 bis 3 Förderzonen und optional 1 Mischzone und insbesondere bevorzugt genau 1 Förderzone.

Ebenso ist es bevorzugt, dass der zweite Abschnitt (II) des Extruders 2 bis 10 Knetzonen und 1 bis 10 Förderzonen umfasst, bevorzugt 2 bis 8 Knetzonen und 1 bis 8 Förderzonen und insbesondere bevorzugt 2 bis 5 Knetzonen und 1 bis 4 Förderzonen.

Darüber hinaus ist es bevorzugt, dass der dritte Abschnitt (III) des Extruders 1 bis 5 Mischzonen, 1 bis 5 Knetzonen, 2 bis 10 Förderzonen und 1 bis 5 Stauzonen umfasst, bevorzugt 1 bis 4 Mischzonen, 1 bis 3 Knetzonen, 2 bis 8 Förderzonen und 1 bis 4 Stauzonen und insbesondere bevorzugt 1 bis 3 Mischzonen, 1 bis 2 Knetzonen, 2 bis 5 Förderzonen und 1 bis 3 Stauzonen.

Gegenstand der vorliegenden Erfindung ist somit auch ein Verfahren, bei dem der zweite Abschnitt (II) des Extruders 2 bis 10 Knetzonen und 1 bis 10 Förderzonen umfasst und/oder der dritte Abschnitt (III) des Extruders 1 bis 5 Mischzonen, 1 bis 5 Knetzonen, 2 bis 10 Förderzonen und 1 bis 5 Stauzonen umfasst.

Üblicherweise folgt auf mindestens eine Förderzone immer mindestens eine Mischzone oder mindestens eine Knetzone oder mindestens eine Stauzone.

Üblicherweise folgt auf eine Förderzone immer genau eine Mischzone oder genau eine Knetzone oder genau eine Stauzone.

Es ist erfindungsgemäß bevorzugt, dass der Extruder räumlich unmittelbar vor dem Ort der Entnahme der polymerisierbaren Mischung (pM), bevorzugt räumlich unmittelbar vor der Düse zur Entnahme der polymerisierbaren Mischung (pM), eine Mischzone aufweist. Besonders bevorzugt weist der Extruder räumlich unmittelbar vor dem Ort der Entnahme der polymerisierbaren Mischung (pM), bevorzugt räumlich unmittelbar vor der Düse zur Entnahme der polymerisierbaren Mischung (pM), eine Mischzone mit mindestens einem Zahnscheiben-Element in Schneckenkonfiguration auf.

"Mindestens ein Zahnscheiben-Element" bedeutet im Rahmen der vorliegenden Erfindung sowohl genau ein Zahnscheiben-Element, als auch zwei oder mehrere Zahnscheibenelemente. Zwei oder mehrere Zahnscheiben-Elemente sind bevorzugt, besonders bevorzugt sind 2 bis 5 Zahnscheiben-Elemente.

In einer erfindungsgemäß bevorzugten Ausführungsform wird in Schritt a) die erste Mischung (M1) bereitgestellt, indem in den Extruder die Komponente (A) eingebracht wird. Die Komponente (A) kann in den Extruder in allen dem Fachmann bekannten Formen eingebracht werden, beispielsweise als Granulat, als Pulver oder in flüssiger Form.

Wird die Komponente (A) in fester Form, also beispielsweise als Granulat in den Extruder eingebracht, so wird sie in dem Extruder üblicherweise zunächst verflüssigt und in mindestens eine Förderzone, bevorzugt in genau eine Förderzone eingebracht. Auf diese mindestens eine Förderzone folgt dann bevorzugt mindestens eine Knetzone, besonders bevorzugt genau eine Knetzone, in der die Komponente (D) zugegeben wird. Auf die mindestens eine Knetzone, bevorzugt genau eine Knetzone, in der die Komponente (D) zugegeben wird, folgt üblicherweise zumindest eine weitere Förderzone und zumindest eine weitere Knetzone, bevorzugt im Bereich von 2 bis 10 Knetzonen und im Bereich von 1 von 10 Förderzonen. Die bevorzugten 2 bis 10 Knetzonen und 1 bis 10 Förderzonen wechseln sich bevorzugt ab, so dass auf eine Knetzone eine Förderzone folgt und auf eine Förderzone eine Knetzone folgt. In diesen wird dann die Komponente (A) mit der Komponente (D) compoundiert unter Erhalt der ersten Mischung (M1). Dies entspricht Schritt a) der bevorzugten Ausführungsform des erfindungsgemäßen Verfahrens.

In einer weiteren Knetzone werden dann die Komponenten (B) und (C) zugegeben. Auf diese Knetzone folgt üblicherweise mindestens eine Förderzone und mindestens eine Knetzone sowie gegebenenfalls mindestens eine Stauzone und mindestens eine Mischzone, in der die Komponenten (B) und (C) mit der ersten Mischung (M1) compoundiert werden, unter Erhalt der polymerisierbaren Mischung (pM). Dies entspricht der gleichzeitigen Durchführung der Schritte b) und c) der besonders bevorzugten Ausführungsform des erfindungsgemäßen Verfahrens.

In dieser Ausführungsform ist beispielsweise der erste Abschnitt des Extruders der Abschnitt, in dem der Extruder die Komponente (A) enthält. Der zweite Abschnitt (II) beginnt mit der Zugabe der Komponente (D) in den Extruder. Der dritte Abschnitt (III) beginnt mit der Zugabe der Komponenten (B) und (C) in den Extruder.

In einer weiteren bevorzugten Ausführungsform wird zunächst ein erster Teil der Komponente (A) in den Extruder eingebracht. Für dieses Einbringen gelten die zuvor beschriebenen Ausführungen und Bevorzugungen für das Einbringen der Komponente (A) entsprechend. Anschließend wird in einer Knetzone die Komponente (D) zugegeben. Auf diese Knetzone, in der die Komponente (D) zugegeben wird, folgen bevorzugt mindestens eine Förderzone und mindestens eine Knetzone, in denen der erste Teil der Komponente (A) mit der Komponente (D) compoundiert wird unter Erhalt einer ersten Mischung (M1), die den ersten Teil der Komponente (A) und die Komponente (D) enthält. Für die mindestens eine Förderzone und die mindestens eine Knetzone gelten die zuvor beschriebenen Ausführungen und Bevorzugungen entsprechend. Dieser Schritt entspricht ebenfalls dem Schritt a) des bevorzugten erfindungsgemäßen Verfahrens.

In einer weiteren Knetzone wird dann ein zweiter Teil der Komponente (A) zusammen mit der Komponente (B) und ein dritter Teil der Komponente (A) zusammen mit der Komponente (C) zugegeben. Auf diese Knetzone folgt üblicherweise mindestens eine Förderzone und mindestens eine Knetzone, sowie gegebenenfalls mindestens eine Stauzone und mindestens eine Mischzone, in der der zweite Teil der Komponente (A), der dritte Teil der Komponente (A), sowie die Komponenten (B) und (C) mit der ersten Mischung (M1) compoundiert werden, unter Erhalt der polymerisierbaren Mischung (pM). Dieser Schritt entspricht der gleichzeitigen Durchführung der Schritte b) und c) in einer besonders bevorzugten Ausführungsform des erfindungsgemäßen Verfahrens.

Diese Ausführungsform ist bevorzugt. In dieser Ausführungsform ist beispielsweise der erste Abschnitt (I) des Extruders der Abschnitt, in dem der Extruder den ersten Teil der Komponente (A) enthält. Der zweite Abschnitt (II) beginnt mit der Zugabe der Komponente (D) in den Extruder. Der dritte Abschnitt (III) beginnt mit der Zugabe des zweiten Teils der Komponente (A) und des dritten Teils der Komponente (A), sowie der Komponenten (B) und (C) in den Extruder.

Im ersten Abschnitt (I) des Extruders enthält der Extruder also die Komponente (A). Im zweiten Abschnitt (II) des Extruders enthält der Extruder die Komponenten (A) und (D) und im dritten Abschnitt (III) des Extruders enthält der Extruder die Komponenten (A) (B), (C) und (D). Es versteht sich von selbst, dass, wenn in einen Abschnitt des Extruders die weiter unten beschriebene optionale Komponente (E), mindestens ein Verdicker, zusätzlich zugegeben wird, dieser Abschnitt sowie die auf ihn folgenden Abschnitte diese Komponente zusätzlich enthalten.

Die Komponenten (A), (B), (C) und (D) werden in dem Extruder üblicherweise in den gleichen Mengenverhältnissen compoundiert wie sie in der herzustellenden polymerisierbaren Mischung (pM) enthalten sein sollen. Beispielsweise werden im Bereich von 28,5 bis 90 Gew.-% der Komponente (A), im Bereich von 1 bis 20 Gew.-% der Komponente (B), im Bereich von 0,5 bis 10 Gew.-% der Komponente (C) und im Bereich von 8,5 bis 70 Gew.-% der Komponente (D), jeweils bezogen auf die Summe der Gewichtsprozente der Komponenten (A), (B), (C) und (D), in dem Extruder compoundiert.

Bevorzugt werden im Bereich von 37 bis 80 Gew.-% der Komponente (A), im Bereich von 2 bis 10 Gew.-% der Komponente (B), im Bereich von 1 bis 5 Gew.-% der Komponente (C) und im Bereich von 17 bis 60 Gew.-% der Komponente (D), jeweils bezogen auf die Summe der Gewichtsprozente der Komponenten (A), (B), (C) und (D), in dem Extruder compoundiert.

Besonders bevorzugt werden im Bereich von 45,5 bis 70 Gew.-% der Komponente (A), im Bereich von 3 bis 6 Gew.-% der Komponente (B), im Bereich von 1,5 bis 3 Gew.-% der Komponente (C) und im Bereich von 25,5 bis 50 Gew.-% der Komponente (D), jeweils bezogen auf die Summe der Gewichtsprozente der Komponenten (A), (B), (C) und (D), in dem Extruder compoundiert.

Wird in einer bevorzugten Ausführungsform der vorliegenden Erfindung zunächst ein erster Teil der Komponente (A) in den Extruder eingebracht, anschließend die Komponente (D) und danach ein zweiter und ein dritter Teil der Komponente (A) zusammen mit den Komponenten (B) und (C) eingebracht, so werden als erster Teil der Komponente (A), bevorzugt im Bereich von 20 bis 80 % der Komponente (A) eingebracht, und als zweiter und dritter Teil der Komponente (A) insgesamt im Bereich von 80 bis 20 % der Komponente (A), jeweils bezogen auf die Gesamtmenge der Komponente (A), die in den Extruder eingebracht wird. Besonders bevorzugt werden als erster Teil der Komponente (A) im Bereich von 40 bis 60% der Komponente (A) eingebracht und als zweiter und dritter Teil der Komponente (A) im Bereich von 60 bis 40 % der Komponente (A), jeweils bezogen auf die Gesamtmenge der Komponente (A), die in den Extruder eingebracht wird.

Für die Komponenten (A), (B), (C), (D) und gegebenenfalls (E) sowie gegebenenfalls die weiteren Komponenten, die im Extruder compoundiert werden können, gelten die nachfolgenden Ausführungen und Bevorzugungen für die in der polymerisierbaren Mischung (pM) enthaltenen Komponenten (A), (B), (C), (D) und gegebenenfalls (E) sowie gegebenenfalls die weiteren Komponenten entsprechend.

Polymerisierbare Mischung (pM)

Die polymerisierbare Mischung (pM), die mit dem erfindungsgemäßen Verfahren erhalten wird, enthält erfindungsgemäß die Komponenten (A) - mindestens ein Lactam, (B) - mindestens einen Katalysator, (C) - mindestens einen Aktivator, und (D) - mindestens ein Fasermaterial.

Beispielsweise enthält die polymerisierbare Mischung (pM) im Bereich von 28,5 bis 90 Gew.-% der Komponente (A), im Bereich von 1 bis 20 Gew.-% der Komponente (B), im Bereich von 0,5 bis 10 Gew.-% der Komponente (C) und im Bereich von 8,5 bis 70 Gew.-% der Komponente (D), jeweils bezogen auf die Summe der Gewichtsprozente der Komponenten (A), (B), (C) und (D), bevorzugt bezogen auf das Gesamtgewicht der polymerisierbaren Mischung (pM).

Bevorzugt enthält die polymerisierbare Mischung (pM) im Bereich von 37 bis 80 Gew.-% der Komponente (A), im Bereich von 2 bis 10 Gew.-% der Komponente (B), im Bereich von 1 bis 5 Gew.-% der Komponente (C) und im Bereich von 17 bis 60 Gew.-% der Komponente (D), jeweils bezogen auf die Summe der Gewichtsprozente der Komponenten (A), (B), (C) und (D), bevorzugt bezogen auf das Gesamtgewicht der polymerisierbaren Mischung (pM).

Insbesondere bevorzugt enthält die polymerisierbare Mischung (pM) im Bereich von 45,5 bis 70 Gew.-% der Komponente (A), im Bereich von 3 bis 6 Gew.-% der Komponente (B), im Bereich von 1,5 bis 3 Gew.-% der Komponente (C) und im Bereich von 25,5 bis 50 Gew.-% der Komponente (D), jeweils bezogen auf die Summe der Gewichtsprozente der Komponenten (A), (B), (C) und (D), bevorzugt bezogen auf das Gesamtgewicht der polymerisierbaren Mischung (pM).

Gegenstand der vorliegenden Erfindung ist somit auch ein Verfahren, bei dem die polymerisierbare Mischung (pM) im Bereich von 28,5 bis 90 Gew.-% der Komponente (A), im Bereich von 1 bis 20 Gew.-% der Komponente (B), im Bereich von 0,5 bis 10 Gew.-% der Komponente (C) und im Bereich von 8,5 bis 70 Gew.-% der Komponente (D) enthält, jeweils bezogen auf das Gesamtgewicht der polymerisierbaren Mischung (pM).

In einer bevorzugten Ausführungsform enthält die polymerisierbare Mischung (pM) zusätzlich eine Komponente (E) - mindestens einen Verdicker. Verdicker als solche sind dem Fachmann bekannt. Bevorzugt ist die Komponente (E) ausgewählt aus der Gruppe bestehend aus thermoplastischen Polystyrolen, Polysulfonen, Polyphenylethern, Polybutadienen, Polyisoprenen und Nanofüllstoffen.

Geeignete Nanofüllstoffe sind beispielsweise Silicate, Graphen und Carbonnanotubes.

Gegenstand der vorliegenden Erfindung ist somit auch ein Verfahren, bei dem die polymerisierbare Mischung (pM) zusätzlich eine Komponente (E), mindestens einen Verdicker, enthält, wobei die Komponente (E) ausgewählt ist aus der Gruppe bestehend aus thermoplastischen Polystyrolen, Polysulfonen, Polyphenylethern, Polybutadienen, Polyisoprenen und Nanofüllstoffen.

Die polymerisierbare Mischung (pM) enthält beispielsweise im Bereich von 0,1 bis 50 Gew.-%, bevorzugt im Bereich von 0,5 bis 30 Gew.-% und insbesondere bevorzugt im Bereich von 1 bis 20 Gew.-% der Komponente (E), bezogen auf das Gesamtgewicht der polymerisierbaren Mischung (pM).

Darüber hinaus kann die polymerisierbare Mischung weitere Komponenten enthalten. Derartige weitere Komponenten sind dem Fachmann als solche bekannt und beispielsweise Stabilisatoren, Farbstoffe, Antistatika, Füllöle, Oberflächenverbesserer, Sikkative, Entformungshilfsmittel, Trennmittel, Antioxidantien, Lichtstabilisatoren, PVC-Stabilisatoren, Gleitmittel, Flammschutzmittel, Treibmittel, Schlagzähmodifikatoren und Nukleierungshilfsmittel.

Die polymerisierbare Mischung (pM) enthält beispielsweise im Bereich von 0,1 bis 10 Gew.-%, bevorzugt im Bereich von 0,2 bis 7 Gew.-% und insbesondere bevorzugt im Bereich von 0,3 bis 5 Gew.-% der weiteren Komponenten, bezogen auf das Gesamtgewicht der polymerisierbaren Mischung (pM).

Die gegebenenfalls in der polymerisierbaren Mischung (pM) enthaltenen weiteren Komponenten sowie gegebenenfalls die Komponente (E) werden üblicherweise ebenfalls in dem Extruder zusammen mit den Komponenten (A), (B), (C) und (D) compoundiert zur Herstellung der polymerisierbaren Mischung (pM).

Die polymerisierbare Mischung (pM) kann darüber hinaus auch bereits polymerisierte Komponente (A) enthalten. Üblicherweise enthält die polymerisierbare Mischung (pM) höchstens 50 Gew.-%, bevorzugt höchstens 20 Gew.-% und insbesondere bevorzugt höchstens 5 Gew.-% an polymerisierter Komponente (A), bezogen auf das Gesamtgewicht der polymerisierbaren Mischung (pM).

Es versteht sich von selbst, dass die polymerisierte Komponente (A) nicht mit den Komponenten (A), (B), (C) und (D) in dem Extruder compoundiert wird, sondern wie vorstehend beschrieben durch die Polymerisation der Komponente (A) während der Compoundierung in dem Extruder, insbesondere während Schritt c), gebildet werden kann.

Die Summe der Gewichtsprozente der in der polymerisierbaren Mischung (pM) enthaltenen Komponenten (A), (B), (C) und (D) addieren sich üblicherweise zu 100 %. Es versteht sich von selbst, dass, wenn die polymerisierbare Mischung (pM) weitere Komponenten sowie gegebenenfalls die Komponente (E) und polymerisierte Komponente (A) enthält, die Summe der Gewichtsprozente der Komponenten (A), (B), (C) und (D) sowie der gegebenenfalls enthaltenen weiteren Komponenten, der Komponente (E) und der polymerisierten Komponente (A) sich üblicherweise zu 100 % addieren.

Die polymerisierbare Mischung (pM) enthält die Komponente (D) dispergiert in den Komponenten (A), (B), (C) sowie gegebenenfalls (E). Die Komponente (D) wird daher auch als "disperse Phase" bezeichnet, die Komponenten (A), (B), (C) sowie gegebenenfalls (E) werden auch als "kontinuierliche Phase" bezeichnet.

Die kontinuierliche Phase, also die in der polymerisierbaren Mischung (pM) enthaltenen Komponenten (A), (B), (C) sowie gegebenenfalls (E), ohne die Komponente (D), weist beispielsweise eine Viskosität im Bereich von 2 bis 1000 mPas auf, bevorzugt im Bereich von 5 bis 500 mPas und insbesondere bevorzugt im Bereich von 10 bis 300 mPas, gemessen mit einem schubspannungskontrollierten Rotationsviskosimeter bei einer Scherrate von 100 s$^{-1}$ und einer Temperatur von 100 °C.

Gegenstand der vorliegenden Erfindung ist außerdem die polymerisierbare Mischung (pM), erhältlich durch das erfindungsgemäße Verfahren.

Für die polymerisierbare Mischung (pM), erhältlich durch das erfindungsgemäße Verfahren, gelten die zuvor beschriebenen Ausführungen und Bevorzugungen in Bezug auf das erfindungsgemäße Verfahren entsprechend.

Nachfolgend werden die in der polymerisierbaren Mischung (pM) enthaltenen Komponenten (A), (B), (C) und (D) näher erläutert.

Komponente (A): Lactam

Erfindungsgemäß ist die Komponente (A) mindestens ein Lactam.

In der vorliegenden Erfindung werden die Begriffe "Komponente (A)" und "mindestens ein Lactam" synonym gebraucht und haben daher die gleiche Bedeutung.

Unter "Lactam" werden erfindungsgemäß zyklische Amide verstanden, die im Ring 4 bis 12 Kohlenstoffatome, bevorzugt 6 bis 12 Kohlenstoffatome aufweisen.

Gegenstand der vorliegenden Erfindung ist somit auch ein Verfahren, bei dem die Komponente (A) mindestens ein Lactam mit 4 bis 12 Kohlenstoffatomen enthält.

Geeignete Lactame sind beispielsweise ausgewählt aus der Gruppe bestehend aus 4-Aminobutansäurelactam (γ-Lactam; γ-Butyrolactam; Pyrrolidon), 5-Aminopentansäurelactam (δ-Lactam; δ-Valerolactam; Piperidon), 6-Aminohexansäurelactam (ε-Lactam; ε-Caprolactam), 7-Aminoheptansäurelactam (ζ-Lactam; ζ-Heptanolactam; Önanthlactam), 8-Aminooktansäurelactam (η-Lactam; η-Oktanolactam; Capryllactam), 9-Nonansäurelactam (θ-Lactam; θ-Nonanolactam), 10-Dekansäurelactam (ω-Dekanolactam; Caprinlactam), 11-Undekansäurelactam (ω-Undekanolactam) und 12-Dodekansäurelactam (ω-Dodekanolactam; Laurolactam).

Gegenstand der vorliegenden Erfindung ist somit auch ein Verfahren, bei dem die Komponente (A) ausgewählt ist aus der Gruppe bestehend aus Pyrrolidon, Piperidon, ε -Caprolactam, Önanthlactam, Capryllactam, Caprinlactam und Laurolactam.

Die Lactame können unsubstituiert oder zumindest monosubstituiert sein. Für den Fall, dass zumindest monosubstituierte Lactame eingesetzt werden, können diese an den Kohlenstoffatomen des Rings einen, zwei oder mehrere Substituenten tragen, die unabhängig voneinander ausgewählt sind aus der Gruppe bestehend aus $C_1$- bis $C_{10}$-Alkyl, $C_5$- bis $C_6$-Cycloalkyl und $C_5$- bis $C_{10}$-Aryl.

Bevorzugt ist die Komponente (A) unsubstituiert.

Als $C_1$- bis $C_{10}$-Alkylsubstituenten sind beispielsweise Methyl, Ethyl, Propyl, Isopropyl, n-Butyl, sec.-Butyl und tert.-Butyl geeignet. Ein geeigneter $C_5$- bis $C_6$-Cycloalkylsubstituent ist beispielsweise Cyclohexyl. Bevorzugte $C_5$- bis $C_{10}$-Arylsubstituenten sind Phenyl und Anthranyl.

Besonders bevorzugt werden unsubstituierte Lactame eingesetzt, wobei 12-Dodekansäurelactam (ω-Dodekanolactam) und ε-Lactam (ε-Caprolactam) bevorzugt sind. Am meisten bevorzugt ist ε-Lactam (ε-Caprolactam).

ε-Caprolactam ist das zyklische Amid der Capronsäure. Es wird auch als 6-Aminohexansäurelactam, 6-Hexanlactam oder Caprolactam bezeichnet. Sein IUPAC-Name lautet "Acepan-2-one". Caprolactam besitzt die CAS-Nummer 105-60-2 und die allgemeine Formel $C_6H_{11}NO$. Verfahren zur Herstellung von Caprolactam sind dem Fachmann bekannt.

Komponente (B): Katalysator

Erfindungsgemäß ist die Komponente (B) mindestens ein Katalysator.

In der vorliegenden Erfindung werden die Bezeichnungen "Komponente (B)" und "mindestens ein Katalysator" synonym gebraucht und haben daher die gleiche Bedeutung.

Der mindestens eine Katalysator ist bevorzugt ein Katalysator für die anionische Polymerisation eines Lactams. Daher ermöglicht der mindestens eine Katalysator bevorzugt die Bildung von Lactamanionen. Der mindestens eine Katalysator ist also in der Lage, Lactamate zu bilden, indem er das stickstoffgebundene Proton des mindestens einen Lactams (Komponente (A)) abspaltet.

Lactamanionen an sich können ebenfalls als der mindestens eine Katalysator fungieren. Der mindestens eine Katalysator kann auch als Initiator bezeichnet werden.

Geeignete Komponenten (B) sind dem Fachmann als solche bekannt und beispielsweise in "Polyamide. Kunststoff-Handbuch", Carl-Hanser-Verlag 1998, beschrieben.

Bevorzugt ist die Komponente (B) ausgewählt aus der Gruppe bestehend aus Alkalimetalllactamaten, Erdalkalimetalllactamaten, Alkalimetallen, Erdalkalimetallen, Alkalimetallhydriden, Erdalkalimetallhydriden, Alkalimetallhydroxiden, Erdalkalimetallhydroxiden, Alkalimetallalkoholaten, Erdalkalimetallalkoholaten, Alkalimetallamiden, Erdalkalimetallamiden, Alkalimetalloxiden, Erdalkalimetalloxiden und metallorganischen Verbindungen.

Gegenstand der vorliegenden Erfindung ist somit auch ein Verfahren, bei dem die Komponente (B) ausgewählt ist aus der Gruppe bestehend aus Alkalimetalllactamaten, Erdalkalimetalllactamaten, Alkalimetallen, Erdalkalimetallen, Akalimetallhydriden, Erdalkalimetallhydriden, Alkalimetallhydroxiden, Erdalkalimetallhydroxiden, Alkalimetallalkoholaten, Erdalkalimetallalkoholaten, Alkalimetallamiden, Erdalkalimetallamiden, Alkalimetalloxiden, Erdalkalimetalloxiden und metallorganischen Verbindungen.

Besonders bevorzugt ist die Komponente (B) ausgewählt aus Alkalimetalllactamaten und Erdalkalimetalllactamaten.

Alkalimetalllactamate sind dem Fachmann als solche bekannt. Geeignete Alkalimetalllactamate sind beispielsweise Natriumcaprolactamat sowie Kaliumcaprolactamat.

Geeignete Erdalkalimetalllactamate sind beispielsweise Bromid-Magnesiumcaprolactamat, Chlorid-Magnesiumcaprolactamat und Magnesium-biscaprolactamat. Geeignete Alkalimetalle sind beispielsweise Natrium und Kalium, geeignete Erdalkalimetalle sind beispielsweise Magnesium und Kalzium. Geeignete Alkalimetallhydride sind beispielsweise Natriumhydrid und Kaliumhydrid, geeignete Alkalimetallhydroxide sind beispielsweise Natriumhydroxid und Kaliumhydroxid. Geeignete Alkalimetallalkoholate sind beispielsweise Natriummethanolat, Natriumethanolat, Natriumpropanolat, Natriumbutanolat, Kaliummethanolat, Kaliumethanolat, Kaliumpropanolat und Kaliumbutanolat.

In einer weiteren insbesondere bevorzugten Ausführungsform ist die Komponente (B) ausgewählt aus der Gruppe bestehend aus Natriumhydrid, Natrium, Natriumcaprolactamat und einer Lösung von Natriumcaprolactamat in Caprolactam. Besonders bevorzugt ist Natriumcaprolactamat und/oder eine Lösung von Natriumcaprolactamat in Caprolactam (zum Beispiel Brüggolen C10, 17 bis 19 Gew.-% Natriumcaprolactamat und Caprolactam). Der mindestens eine Katalysator kann als Feststoff oder in Lösung eingesetzt werden. Bevorzugt wird der mindestens eine Katalysator als Feststoff eingesetzt. Der Katalysator wird insbesondere bevorzugt in eine Caprolactamschmelze gegeben, in der er gelöst werden kann.

Dem Fachmann ist klar, dass, wenn die Komponente (B) beispielsweise ein Alkalimetall ist, dieses bei Kontakt mit dem mindestens einen Lactam (Komponente (A)) reagiert und dabei ein Alkalimetalllactamat bildet.

Komponente (C): Aktivator

Erfindungsgemäß ist die Komponente (C) mindestens ein Aktivator.

Im Rahmen der vorliegenden Erfindung werden die Begriffe "Komponente (C)" und "mindestens ein Aktivator" synonym gebraucht und haben von daher die gleiche Bedeutung.

Als der mindestens eine Aktivator eignet sich jeder dem Fachmann bekannte Aktivator, der dazu geeignet ist, die anionische Polymerisation des mindestens einen Lactams (Komponente (A)) zu aktivieren. Vorzugsweise ist der mindestens eine Aktivator ausgewählt aus der Gruppe bestehend aus N-substituierten Lactamen, Diisocyanaten, Polyisocyanaten, Allophanaten und Disäurehalogeniden, besonders bevorzugt ist der mindestens eine Aktivator ausgewählt aus der Gruppe bestehend aus N-substituierten Lactamen.

Gegenstand der vorliegenden Erfindung ist somit auch ein Verfahren, bei dem die Komponente (C) ausgewählt ist aus N-substituierten Lactamen, Diisocyanaten, Polyisocyanaten, Allophanaten und Disäurehalogeniden.

Bevorzugt sind die N-substituierten Lactame elektrophil N-substituiert. Als elektrophil N-substituierte Lactame eignen sich beispielsweise Acyllactame wie beispielsweise N-Acetylcaprolactam oder deren Vorstufen, welche zusammen mit dem mindestens einen Lactam (Komponente (A)) in situ ein aktiviertes Lactam bilden. Ein weiteres geeignetes N-substituiertes Lactam ist beispielsweise ein gecapptes Diisocyanat.

Als Diisocyanate können sowohl aliphatische Diisocyanate als auch aromatische Diisocyanate eingesetzt werden. Zu den aliphatische Diisocyanaten zählen beispielsweise Butylendiisocyanat, Hexamethylendiisocyanat, Octamethylendiisocyanat, Decamethylendiisocyanat, Undodecamethylendiisocyanat, Dodecamethylendiisocyanat, 4,4'-Methylenbis (cyclohexylisocyanat) und Isophorondiisocyanat. Aromatische Diisocyanate sind beispielsweise Toluyldiisocyanat, 4,4'-Methylenbis(phenyl)isocyanat. Polyisocyanate sind zum Beispiel Isocyanate von Hexamethylendiisocyanat (Basonat HI 100/BASF SE). Geeignete Allophanate sind zum Beispiel Ethylallophanate.

Als Disäurehalogenide eignen sich sowohl aliphatische Disäurehalogenide als auch aromatische Disäurehalogenide. Als aliphatische Disäurehalogenide eignen sich Verbindungen wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid, 4,4'-Methylenbis(cyclohexylsäurechlorid), 4,4'-Methylenbis(cyclohexylsäurebromid), Isophorondisäurechlorid, Isophorondisäurebromid; als auch aromatische Disäurehalogenide, wie Toluylmethylenldisäurechlorid, Toluylmethylendisäurechlorid, 4,4'-Methylenbis(phenyl)säurechlorid, 4,4'-Methylenbis(phenyl)säurebromid.

In einer bevorzugten Ausführungsform ist die Komponente (C) ausgewählt aus der Gruppe bestehend aus Hexamethylendiisocyanat, Isophorondiisocyanat, Hexamethylendisäurebromid, Hexamethylendisäurechlorid und deren Mischungen; besonders bevorzugt wird Hexamethylendiisocyanat eingesetzt.

Der mindestens eine Aktivator kann in Lösung eingesetzt werden. Insbesondere kann der mindestens eine Aktivator in Caprolactam gelöst werden.

Geeignet als mindestens ein Aktivator ist außerdem beispielsweise Brüggolen® C20, 80% Caprolactam-blockiertes 1,6-Hexamethylendiisocyanat in Caprolactam der Firma Brüggemann, DE.

Komponente (D): Fasermaterial

Erfindungsgemäß ist die Komponente (D) mindestens ein Fasermaterial.

Im Rahmen der vorliegenden Erfindung werden die Begriffe "Komponente (D)" und "mindestens ein Fasermaterial" synonym gebraucht und haben daher die gleiche Bedeutung.

Als das mindestens eine Fasermaterial eignen sich alle dem Fachmann bekannten Fasermaterialien. Bevorzugt ist die Komponente (D) ausgewählt aus der Gruppe aus anorganischen Fasermaterialien, organischen Fasermaterialien und Naturfasermaterialien .

Anorganische Fasermaterialien sind beispielsweise Borfasermaterialien, Glasfasermaterialien, Kohlenstofffasermaterialien, Kieselsäurefasermaterialien, Keramikfasermaterialien und Basaltfasermaterialien.

Organische Fasermaterialien sind beispielsweise Aramidfasermaterialien, Poly(p-phenylen-2,6-benzobisoxazol)-Fasermaterialien, Polyesterfasermaterialien, Nylonfasermaterialien und Polyethylenfasermaterialien.

Naturfasermaterialien sind beispielsweise Holzfasermaterialien, Flachsfasermaterialien, Hanffasermaterialien und Sisalfasermaterialien.

Bevorzugt ist die Komponente (D) ausgewählt aus der Gruppe bestehend aus Glasfasermaterialien, Kohlenstofffasermaterialien, Aramidfasermaterialien, Poly(p-phenylen-2,6-benzobisoxazol)-Fasermaterialien, Borfasermaterialien, Metallfasermaterialien und Kaliumtitanatfasermaterialien. Insbesondere bevorzugt ist die Komponente (D) ein Glasfasermaterial.

Gegenstand der vorliegenden Erfindung ist somit auch ein Verfahren, bei dem die Komponente (D) ausgewählt ist aus der Gruppe bestehend aus Glasfasermaterialien, Kohlenstofffasermaterialien, Aramidfasermaterialien, Poly(p-phenylen-2,6-benzobisoxazol)-Fasermaterialien, Borfasermaterialien, Metallfasermaterialien und Kaliumtitanatfasermaterialien.

Das mindestens eine Fasermaterial kann in allen dem Fachmann bekannten Formen eingesetzt werden. Beispielsweise kann das mindestens eine Fasermaterial als Flächengewebe, als einzelne Faser oder als Faserbündel eingesetzt werden.

Flächengewebe sind dem Fachmann bekannt. Als Flächengewebe werden beispielsweise Gewebe, Gestricke, Gelege, Gewirke und Vliese bezeichnet. Als Faserbündel werden beispielsweise Rovings, Schnittglasfasern und Prepregs bezeichnet. Bevorzugt ist die Komponente (D) ein Faserbündel.

Bevorzugte Faserbündel bestehen beispielsweise aus 100 bis 100 000 einzelnen Fasern, bevorzugt aus 1 000 bis 70 000 einzelnen Fasern und insbesondere bevorzugt aus 2 000 bis 50 000 einzelnen Fasern.

Die Faserbündel weisen beispielsweise eine Masse von 50 bis 10 000 tex (1 tex = 1 g Faser pro 1 000 m) auf, bevorzugt im Bereich von 500 bis 8 000 tex und insbesondere bevorzugt von 800 bis 6 000 tex.

Die Komponente (D) wird dem Extruder in dem erfindungsgemäßen Verfahren vorzugsweise in einer Form ausgewählt aus der Gruppe bestehend aus Rovings, Schnittglasfasern, gemahlenen Glasfasern und Prepregs zugeführt.

Gegenstand der vorliegenden Erfindung ist somit auch ein Verfahren, bei dem die Komponente (D) dem Extruder vor dem Compoundieren der Komponenten (A), (B), (C) und (D) in einer Form ausgewählt aus der Gruppe bestehend aus Rovings, Schnittglasfasern, gemahlenen Glasfasern und Prepregs zugeführt wird.

Besonders bevorzugt wird die Komponente (D) dem Extruder in dem erfindungsgemäßen Verfahren in einer Form ausgewählt aus der Gruppe bestehend aus Rovings, Schnittglasfasern und Prepregs zugeführt.

Gegenstand der vorliegenden Erfindung ist somit auch ein Verfahren, bei dem die Komponente (D) dem Extruder vor dem Compoundieren der Komponenten (A), (B), (C) und (D) in einer Form ausgewählt aus der Gruppe bestehend aus Rovings, Schnittglasfasern und Prepregs zugeführt wird.

In einer insbesondere bevorzugten Ausführungsform umfasst daher die Bereitstellung der ersten Mischung (M1) gemäß Schritt a) des erfindungsgemäßen Verfahrens die folgenden Schritte:

a1) Einbringen der Komponente (A) in den Extruder,
a2) Zugabe der Komponente (D) in einer Form ausgewählt aus der Gruppe bestehend aus Rovings, Schnittglasfasern, gemahlenen Glasfasern und Prepregs, bevorzugt in einer Form ausgewählt aus der Gruppe bestehend aus Rovings, Schnittglasfasern und Prepregs, zu der Komponente (A) in dem Extruder, und
a3) Compoundieren der Komponenten (A) und (D) in dem Extruder unter Erhalt der ersten Mischung (M1).

Gegenstand der vorliegenden Erfindung ist somit auch ein Verfahren, bei dem die Bereitstellung der ersten Mischung (M1) in Schritt a) die folgenden Schritte umfasst:

a1) Einbringen der Komponente (A) in den Extruder,
a2) Zugabe der Komponente (D) in einer Form ausgewählt aus der Gruppe bestehend aus Rovings, Schnittglasfasern, gemahlenen Glasfasern und Prepregs zu der Komponente (A) in dem Extruder und
a3) Compoundieren der Komponenten (A) und (D) in dem Extruder unter Erhalt der ersten Mischung (M1).

Während der Compoundierung der Komponenten (A), (B), (C) und (D) in dem Extruder wird die Komponente (D) üblicherweise zerkleinert. "Zerkleinern" bedeutet im Rahmen der vorliegenden Erfindung, dass die Komponente (D), insbesondere die als Komponente (D) bevorzugt eingesetzten Faserbündel, kürzer wird. Außerdem lösen sich die als Komponente (D) bevorzugt eingesetzten Faserbündel auf. Dies bedeutet, dass die Faserbündel geteilt werden und dann als einzelne Fasern vorliegen. Daher enthält die polymerisierbare Mischung (pM) bevorzugt einzelne Fasern, die kürzer sind als die als Komponente (D) bevorzugt eingesetzten Faserbündel, die dem Extruder zugeführt werden.

Beispielsweise liegt die in der polymerisierbaren Mischung (pM) enthaltene Komponente (D) als einzelne Fasern mit einer Länge im Bereich von 10 bis 1 000 $\mu$m vor, bevorzugt im Bereich von 20 bis 500 $\mu$m und insbesondere bevorzugt im Bereich von 30 bis 300 $\mu$m.

Gegenstand der vorliegenden Erfindung ist somit auch ein Verfahren, bei dem die in der polymerisierbaren Mischung (pM) enthaltene Komponente (D) als einzelne Faser mit einer Länge im Bereich von 10 bis 1000 $\mu$m vorliegt.

Ohne die Erfindung hierauf beschränken zu wollen, besteht die Vorstellung, dass die Komponente (D) insbesondere in den Knetzonen des Extruders zerkleinert wird.

Es versteht sich von selbst, dass die Komponente (D) nicht nur während der Compoundierung der Komponenten (A), (B), (C) und (D) zerkleinert wird, sondern dass sie in der bevorzugten Ausführungsform, in der zunächst die erste Mischung (M1) in Schritt a) bereitgestellt wird, bereits zumindest teilweise zerkleinert wird, wenn nur die Komponente (A) mit der Komponente (D) compoundiert wird.

### Polyamid (P)

Die erfindungsgemäß hergestellte polymerisierbare Mischung (pM) kann zur Herstellung eines Polyamids (P) verwendet werden.

Hierzu wird die polymerisierbare Mischung (pM) polymerisiert unter Erhalt des Polyamids (P).

Gegenstand der vorliegenden Erfindung ist somit auch ein Verfahren zur Herstellung eines Polyamids (P), wobei die polymerisierbare Mischung (pM), erhältlich nach dem erfindungsgemäßen Verfahren, polymerisiert wird unter Erhalt des Polyamids (P).

Die Polymerisation der polymerisierbaren Mischung (pM) wird üblicherweise gestartet, indem die polymerisierbare Mischung (pM) auf eine Temperatur oberhalb der Schmelztemperatur des mindestens einen Lactams erwärmt wird. Bevorzugt wird die polymerisierbare Mischung (pM) auf eine Temperatur erwärmt, die unterhalb der Schmelztemperatur des Polyamids (P) liegt.

Es versteht sich von selbst, dass die Schmelztemperatur der Komponente (A) unterhalb der Schmelztemperatur des Polyamids (P) liegt.

Beispielsweise wird die polymerisierbare Mischung (pM) zur Polymerisation auf eine Temperatur im Bereich von 130 bis 180 °C, bevorzugt im Bereich von 135 bis 170 °C und insbesondere bevorzugt im Bereich von 140 bis 160 °C erwärmt.

Dabei polymerisiert das in der polymerisierbaren Mischung (pM) enthaltene mindestens eine Lactam und das Polyamid (P) wird erhalten.

Gegenstand der vorliegenden Erfindung ist somit auch ein Polyamid (P), erhältlich nach dem beschriebenen Verfahren zur Herstellung eines Polyamids (P).

Zur Polymerisation kann die polymerisierbare Mischung (pM) beispielsweise in eine Form eingebracht werden. Dann wird bei der Polymerisation der polymerisierbaren Mischung (pM) ein Formkörper aus dem Polyamid (P) erhalten.

Gegenstand der vorliegenden Erfindung ist somit auch ein Formkörper aus dem erfindungsgemäßen Polyamid (P).

Gegenstand der vorliegenden Erfindung ist weiterhin die Verwendung der erfindungsgemäß hergestellten polymerisierbaren Mischung (pM) zur Herstellung eines Polyamids (P).

**Patentansprüche**

1. Verfahren zur Herstellung einer polymerisierbaren Mischung (pM), die die Komponenten

    (A) mindestens ein Lactam,
    (B) mindestens einen Katalysator,
    (C) mindestens einen Aktivator,
    (D) mindestens ein Fasermaterial

    enthält, **dadurch gekennzeichnet, dass** die Komponenten (A), (B), (C) und (D) in einem Extruder mit einer Scherrate von mindestens 500 s⁻¹ compoundiert werden unter Erhalt der polymerisierbaren Mischung (pM), wobei
    das Compoundieren der Komponenten (A), (B), (C) und (D) in dem Extruder die folgenden Schritte umfasst

    a) Bereitstellung einer ersten Mischung (M1),
    die die Komponenten (A) und (D) enthält, in dem Extruder,
    b) Zugabe der Komponente (C) zu der ersten Mischung (M1) in dem Extruder unter Erhalt einer zweiten Mischung (M2) in dem Extruder,
    c) Zugabe der Komponente (B) zu der zweiten Mischung (M2) in dem Extruder unter Erhalt der polymerisierbaren Mischung (pM) in dem Extruder.

2. Verfahren gemäß Anspruch 1, **dadurch gekennzeichnet, dass** nach Schritt c) der folgende Schritt durchgeführt wird:
   d) granulieren der in Schritt c) erhaltenen polymerisierbaren Mischung (pM) unter Erhalt einer granulierten polymerisierbaren Mischung (gpM).

3. Verfahren gemäß Anspruch 1 oder 2, **dadurch gekennzeichnet, dass** zwischen der Zugabe der Komponente (B) in Schritt c) und dem Erhalt der granulierten polymerisierbaren Mischung (gpM) in Schritt d) ein Zeitraum von höchstens 10 Minuten vergeht.

4. Verfahren gemäß einem der Ansprüche 1 bis 3, **dadurch gekennzeichnet, dass** die Schritte b) und c) gleichzeitig durchgeführt werden.

5. Verfahren gemäß einem der Ansprüche 1 bis 4, **dadurch gekennzeichnet, dass** der Extruder mindestens die folgenden Abschnitte umfasst

    a. einen ersten Abschnitt,
    b. einen zweiten Abschnitt und
    c. einen dritten Abschnitt,

   wobei der Extruder im ersten Abschnitt (I) eine erste Temperatur (T1), im zweiten Abschnitt (II) eine zweite Temperatur (T2) und im dritten Abschnitt (III) eine dritte Temperatur (T3) aufweist, wobei die zweite Temperatur (T2) im Bereich von 105 bis 220 °C liegt.

6. Verfahren gemäß Anspruch 5, **dadurch gekennzeichnet, dass** der Extruder im ersten Abschnitt (I) eine erste Temperatur (T1), die im Bereich von 20°C bis 70°C liegt, aufweist, und/oder der Extruder im dritten Abschnitt (III) eine dritte Temperatur (T3), die im Bereich von 20 bis < 105 °C liegt, aufweist.

7. Verfahren gemäß Anspruch 5 oder 6, **dadurch gekennzeichnet, dass** der zweite Abschnitt (II) des Extruders 2 bis 10 Knetzonen und 1 bis 10 Förderzonen umfasst und/oder der dritte Abschnitt (III) des Extruders 1 bis 5 Mischzonen, 1 bis 5 Knetzonen, 2 bis 10 Förderzonen und 1 bis 5 Stauzonen umfasst.

8. Verfahren gemäß einem der Ansprüche 1 bis 7, **dadurch gekennzeichnet, dass** die polymerisierbare Mischung (pM) im Bereich von 28,5 bis 90 Gew.-%

der Komponente (A), im Bereich von 1 bis 20 Gew.-% der Komponente (B), im Bereich von 0,5 bis 10 Gew.-% der Komponente (C) und im Bereich von 8,5 bis 70 Gew.-% der Komponente (D) enthält, jeweils bezogen auf das Gesamtgewicht der polymerisierbaren Mischung (pM).

9. Verfahren gemäß einem der Ansprüche 1 bis 8, **dadurch gekennzeichnet, dass** die Komponente (D) ausgewählt ist aus der Gruppe bestehend aus Glasfasermaterialien, Kohlenstofffasermaterialien, Aramidfasermaterialien, Poly(p-phenylen-2,6-benzobisoxazol)-Fasermaterialien, Borfasermaterialien, Metallfasermaterialien und Kaliumtitanatfasermaterialien.

10. Verfahren gemäß einem der Ansprüche 1 bis 9, **dadurch gekennzeichnet, dass** die in der polymerisierbaren Mischung (pM) enthaltene Komponente (D) als einzelne Faser mit einer Länge im Bereich von 10 bis 1000 $\mu$m vorliegt.

11. Verfahren gemäß einem der Ansprüche 1 bis 10, **dadurch gekennzeichnet, dass** die polymerisierbare Mischung (pM) zusätzlich eine Komponente (E), mindestens einen Verdicker, enthält, wobei die Komponente (E) ausgewählt ist aus der Gruppe bestehend aus thermoplastischen Polystyrolen, Polysulfonen, Polyphenylethern, Polybutadienen, Polyisoprenen und Nanofüllstoffen.

12. Polymerisierbare Mischung (pM) erhältlich nach einem Verfahren gemäß einem der Ansprüche 1 bis 11.

13. Verfahren zur Herstellung eines Polyamids (P), **dadurch gekennzeichnet, dass** die polymerisierbare Mischung (pM) gemäß Anspruch 12 polymerisiert wird unter Erhalt des Polyamids (P).

14. Polyamid (P) erhältlich nach einem Verfahren gemäß Anspruch 13.

15. Formkörper aus einem Polyamid (P) gemäß Anspruch 14.

16. Verwendung der polymerisierbaren Mischung (pM) gemäß Anspruch 12, zur Herstellung eines Polyamids (P).

**Claims**

1. A process for the production of a polymerizable mixture (pM) which comprises the following components

    (A) at least one lactam,
    (B) at least one catalyst,

    (C) at least one activator,
    (D) at least one fiber material

which comprises compounding components (A), (B), (C), and (D) in an extruder with a shear rate of at least 500 s$^{-1}$ to give the polymerizable mixture (pM), wherein the compounding of components (A), (B), (C), and (D) in the extruder comprises the following steps:

    a) provision, in the extruder, of a first mixture (M1) which comprises components (A) and (D),
    b) addition of component (C) to the first mixture (M1) in the extruder to give a second mixture (M2) in the extruder,
    c) addition of component (B) to the second mixture (M2) in the extruder to give the polymerizable mixture (pM) in the extruder.

2. The process according to claim 1, wherein the following step is carried out after step c):
d) pelletization of the polymerizable mixture (pM) obtained in step c) to give a pelletized polymerizable mixture (gpM).

3. The process according to claim 1 or 2, wherein the time that expires between adding component (B) in step c) and obtaining the pelletized polymerizable mixture (gpM) in step d) is at most 10 minutes.

4. The process according to any of claims 1 to 3, wherein the steps b) and c) are carried out simultaneously.

5. The process according to any of claims 1 to 4, wherein the extruder comprises at least the following sections:

    a. a first section,
    b. a second section, and
    c. a third section,

wherein a first temperature (T1) prevails in the first section (I) of the extruder, a second temperature (T2) prevails in the second section (II), and a third temperature (T3) prevails in the third section (III), wherein the second temperature (T2) is in the range from 105 to 220°C.

6. The process according to claim 5, wherein a first temperature (T1) in the range from 20°C to 70°C prevails in the first section (I) of the extruder, and/or a third temperature (T3) in the range from 20 to < 105°C prevails in the third section (III) of the extruder.

7. The process according to claim 5 or 6, wherein the second section (II) of the extruder comprises from 2 to 10 kneading zones and from 1 to 10 conveying zones, and/or the third section (III) of the extruder comprises from 1 to 5 mixing zones, from 1 to 5 kneading zones, from 2 to 10 conveying zones, and from 1 to 5 flow-restricting zones.

8. The process according to any of claims 1 to 7, wherein the polymerizable mixture (pM) comprises from 28.5 to 90% by weight of component (A), from 1 to 20% by weight of component (B), from 0.5 to 10% by weight of component (C), and from 8.5 to 70% by weight of component (D), based in each case on the total weight of the polymerizable mixture (pM).

9. The process according to any of claims 1 to 8, wherein component (D) is selected from the group consisting of glass fiber materials, carbon fiber materials, aramid fiber materials, poly(p-phenylene-2,6-benzobisoxazole) fiber materials, boron fiber materials, metal fiber materials, and potassium titanate fiber materials.

10. The process according to any of claims 1 to 9, wherein component (D) comprised in the polymerizable mixture (pM) takes the form of individual fiber of length from 10 to 1000 $\mu$m.

11. The process according to any of claims 1 to 10, wherein the polymerizable mixture (pM) also comprises a component (E), at least one thickener, wherein component (E) is selected from the group consisting of thermoplastic polystyrenes, polysulfones, polyphenylethers, polybutadienes, polyisoprenes, and nanofillers.

12. A polymerizable mixture (pM) obtainable by a process according to any of claims 1 to 11.

13. A process for the production of a polyamide (P), which comprises polymerizing the polymerizable mixture (pM) according to claim 12 to give the polyamide (P).

14. A polyamide (P) obtainable by a process according to claim 13.

15. A molding made of a polyamide (P) according to claim 14.

16. The use, for the production of a polyamide (P), of the polymerizable mixture (pM) according to claim 12.

**Revendications**

1. Procédé de fabrication d'un mélange polymérisable (pM), qui contient les composants suivants :

   (A) au moins un lactame,

   (B) au moins un catalyseur,
   (C) au moins un activateur,
   (D) au moins un matériau fibreux,

   **caractérisé en ce que** les composants (A), (B), (C) et (D) sont combinés dans une extrudeuse avec un taux de cisaillement d'au moins 500 s$^{-1}$ pour obtenir le mélange polymérisable (pM), la combinaison des composants (A), (B), (C) et (D) dans l'extrudeuse comprenant les étapes suivantes :

   a) la préparation d'un premier mélange (M1), qui contient les composants (A) et (D), dans l'extrudeuse,
   b) l'ajout du composant (C) au premier mélange (M1) dans l'extrudeuse pour obtenir un deuxième mélange (M2) dans l'extrudeuse,
   c) l'ajout du composant (B) au deuxième mélange (M2) dans l'extrudeuse pour obtenir le mélange polymérisable (pM) dans l'extrudeuse.

2. Procédé selon la revendication 1, **caractérisé en ce que** l'étape suivante est réalisée après l'étape c) :
   d) la granulation du mélange polymérisable (pM) obtenu à l'étape c) pour obtenir un mélange polymérisable granulé (gpM).

3. Procédé selon la revendication 1 ou 2, **caractérisé en ce qu'**une durée d'au plus 10 minutes s'écoule entre l'ajout du composant (B) à l'étape c) et l'obtention du mélange polymérisable granulé (gpM) à l'étape d).

4. Procédé selon l'une quelconque des revendications 1 à 3, **caractérisé en ce que** les étapes b) et c) sont réalisées simultanément.

5. Procédé selon l'une quelconque des revendications 1 à 4, **caractérisé en ce que** l'extrudeuse comprend au moins les sections suivantes :

   a. une première section,
   b. une deuxième section et
   c. une troisième section,

   l'extrudeuse présentant une première température (T1) dans la première section (I), une deuxième température (T2) dans la deuxième section (II) et une troisième température (T3) dans la troisième section (III), la deuxième température (T2) se situant dans la plage allant de 105 à 220 °C.

6. Procédé selon la revendication 5, **caractérisé en ce que** l'extrudeuse présente dans la première section (I) une première température (T1), qui se situe dans la plage allant de 20 °C à 70 °C, et/ou l'extrudeuse présente dans la troisième section (III) une troisième température (T3), qui se situe dans la plage allant de 20 à < 105 °C.

**7.** Procédé selon la revendication 5 ou 6, **caractérisé en ce que** la deuxième section (II) de l'extrudeuse comprend 2 à 10 zones de malaxage et 1 à 10 zones de transport, et/ou la troisième section (III) de l'extrudeuse comprend 1 à 5 zones de mélange, 1 à 5 zones de malaxage, 2 à 10 zones de transport et 1 à 5 zones d'accumulation.

**8.** Procédé selon l'une quelconque des revendications 1 à 7, **caractérisé en ce que** le mélange polymérisable (pM) contient dans la plage allant de 28,5 à 90 % en poids du composant (A), dans la plage allant de 1 à 20 % en poids du composant (B), dans la plage allant de 0,5 à 10 % en poids du composant C, et dans la plage allant de 8,5 à 70 % en poids du composant (D), à chaque fois par rapport au poids total du mélange polymérisable (pM).

**9.** Procédé selon l'une quelconque des revendications 1 à 8, **caractérisé en ce que** le composant (D) est choisi dans le groupe constitué par les matériaux à base de fibres de verre, les matériaux à base de fibres de carbone, les matériaux à base de fibres d'aramide, les matériaux à base de fibres de poly(p-phénylène-2,6-benzobisoxazole), les matériaux à base de fibres de bore, les matériaux à base de fibres métalliques et les matériaux à base de fibres de titanate de potassium.

**10.** Procédé selon l'une quelconque des revendications 1 à 9, **caractérisé en ce que** le composant (D) contenu dans le mélange polymérisable (pM) se présente en tant que fibres individuelles avec une longueur dans la plage allant de 10 à 1 000 $\mu$m.

**11.** Procédé selon l'une quelconque des revendications 1 à 10, **caractérisé en ce que** le mélange polymérisable (pM) contient en outre un composant (E), au moins un épaississant, le composant (E) étant choisi dans le groupe constitué par les polystyrènes thermoplastiques, les polysulfones, les polyphényléthers, les polybutadiènes, les polyisoprènes et les nanocharges.

**12.** Mélange polymérisable (pM) pouvant être obtenu par un procédé selon l'une quelconque des revendications 1 à 11.

**13.** Procédé de fabrication d'un polyamide (P), **caractérisé en ce que** le mélange polymérisable (pM) selon la revendication 12 est polymérisé pour obtenir le polyamide (P).

**14.** Polyamide (P) pouvant être obtenu par un procédé selon la revendication 13.

**15.** Corps moulé en un polyamide (P) selon la revendication 14.

**16.** Utilisation du mélange polymérisable (pM) selon la revendication 12 pour la fabrication d'un polyamide (P).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014086757 A
- EP 2789641 A
- US 20100286343 A
- EP 0459199 A

**In der Beschreibung aufgeführte Nicht-Patentliteratur**

- *CHEMICAL ABSTRACTS,* 105-60-2